(19) Europäisches Patentamt
European Patent Office
Office européen des brevets

(11) **EP 3 068 638 B1**

(12) **FASCICULE DE BREVET EUROPEEN**

(45) Date de publication et mention de la délivrance du brevet:
**31.01.2018 Bulletin 2018/05**

(21) Numéro de dépôt: **14799185.5**

(22) Date de dépôt: **02.10.2014**

(51) Int Cl.:
**B60C 23/06** $^{(2006.01)}$

(86) Numéro de dépôt international:
**PCT/FR2014/052501**

(87) Numéro de publication internationale:
**WO 2015/071559 (21.05.2015 Gazette 2015/20)**

(54) **PROCEDE D'AIDE A LA DECISION PAR APPROCHE BAYESIENNE DANS UN SYSTEME DE SURVEILLANCE DE LA PRESSION DES PNEUMATIQUES D'UN VEHICULE AUTOMOBILE**

**VERFAHREN ZUR AUF BAYESSCHE MERKMALE BASIERTEN ENTSCHEINDUNGSFINDUNG FÜR EIN REIFENÜBERWACHNGSSYSTEM**

**METHOD OF ASSISTANCE TO DECISION BASED ON BAYESIAN APPROACH FOR A TIRE PRESSURE MONITORING SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2013 FR 1361106**

(43) Date de publication de la demande:
**21.09.2016 Bulletin 2016/38**

(73) Titulaire: **Renault S.A.S.**
**92100 Boulogne-Billancourt (FR)**

(72) Inventeurs:
• **PITA-GIL, Guillermo**
**F-75014 Paris (FR)**
• **SAINT-LOUP, Philippe**
**F-78760 Jouars Pontchartrain (FR)**
• **DAVINS-VALLDAURA, Joan**
**F-75014 Paris (FR)**

(56) Documents cités:
**EP-A1- 1 384 604 EP-A2- 2 226 206**

**Description**

La présente invention concerne le domaine du diagnostic de l'état de gonflage des pneumatiques équipant des roues d'un véhicule automobile. Plus particulièrement, l'invention concerne les méthodes conduisant à une détection indirecte d'un état de gonflage des pneumatiques.

Un état de gonflage défaillant d'un pneumatique, autrement dit un sous-gonflage de ce pneumatique, se caractérise par une baisse de pression du pneumatique par rapport à une pression normale de celui-ci, étant entendu que les cas de sous-gonflage englobent les cas de crevaison. Or, un état de gonflage défaillant d'un pneumatique peut provoquer l'éclatement de celui-ci, dans certaines conditions de conduite, mettant gravement en danger la sécurité des personnes embarquées dans le véhicule. Même en l'absence d'éclatement, un sous-gonflage présente l'inconvénient d'accroître la consommation de carburant du véhicule et la rapidité d'usure du pneumatique.

C'est pourquoi, une règlementation en cours d'adoption à l'échelle mondiale impose d'équiper progressivement tous les nouveaux véhicules automobiles de systèmes de surveillance de la pression des pneumatiques ou SSPP. La majorité de ces systèmes utilisent des capteurs de pression installés sur chaque pneumatique pour transmettre une information sur la pression des pneumatiques en temps réel à l'unité de contrôle moteur ou à une unité de calcul spécifique du véhicule pour traitement et prise en compte de cette information parmi divers phénomènes dynamiques susceptibles d'affecter eux aussi, de manière transitoire par exemple, la pression dans les pneumatiques. En cas de sous-gonflage, le système est conçu pour transmettre automatiquement un message d'alerte au conducteur, par exemple sous la forme d'un affichage sur le tableau de bord. Ce type de système nécessite toutefois d'intégrer aux pneumatiques un équipement de mesure relativement coûteux.

Par opposition avec ce premier type de système SSPP, un second type de système SSPP, dit SSPP indirect, se caractérise par l'absence de capteurs de pression et repose sur une estimation par des algorithmes appropriés de la probabilité de sous-gonflage de chaque pneumatique sur une plage de vitesse donnée, ainsi que d'un taux de confiance associé à cette probabilité, dépendant du temps passé dans la plage de vitesse, à partir de l'étude de la vitesse des roues du véhicule. La probabilité représente les chances en pourcentage d'être dans un état de sous-gonflage pour une roue donnée. Cette valeur est calculée en instantanée sur quelques périodes d'échantillonnage. Le taux de confiance représente un facteur d'oubli nécessaire au changement de plage de vitesse.

Même si ce second type de système de surveillance peut facilement être mis en oeuvre par exemple à partir des valeurs de vitesse de rotation des roues estimées ou mesurées par les capteurs du contrôle d'anti-blocage des roues, il est toutefois moins précis que les systèmes de surveillance directs. En effet, en raison de l'absence de capteurs de pression, le nombre de fausses alertes de détection de sous-gonflage est susceptible d'augmenter car la probabilité estimée par les algorithmes dépend du temps de roulage, de l'apprentissage et de leur fiabilité à toutes les situations.

Les systèmes de surveillance indirects reposent plus précisément soit sur une analyse du rayon de roulement de la roue, soit sur une analyse des vibrations de la roue. L'analyse du rayon de la roue est mise en oeuvre par les systèmes de surveillance indirects qui reposent sur un algorithme basé sur l'étude de l'écart de vitesse entre chacune des roues. L'effet ici exploité tient au fait qu'un sous-gonflage d'un pneumatique induit une variation du rayon de roulement et donc de la vitesse angulaire. Ainsi, dès qu'un écart de vitesse entre des roues s'accroît, un problème de sous-gonflage est remonté. On connaît par exemple du document de brevet FR2927018 un système de surveillance indirect de l'état de gonflage des pneumatiques, mettant en oeuvre un tel algorithme de calcul comportant une mesure des vitesses angulaires des roues du véhicule, un calcul de plusieurs critères de comparaison des vitesses angulaires mesurées des roues et une analyse des critères calculés pour détecter l'état de gonflage de chaque roue du véhicule. La validité de ces critères, basés sur l'étude de l'écart des vitesses angulaires mesurées entre chacune des roues, est importante dans la mesure où de nombreux phénomènes dynamiques sont susceptibles de provoquer des variations non homogènes parmi les rayons de roulement des roues et ainsi augmenter le taux de fausses alertes concernant un état défectueux des pneumatiques. L'algorithme est alors conçu pour s'assurer qu'une disparité parmi les vitesses angulaires mesurées des roues présente une probabilité forte de traduire un état de gonflage défectueux d'au moins un des pneumatiques équipant le véhicule. La performance de cet algorithme dépend cependant du nombre de roues qui sont dégonflées. Ainsi, si un tel algorithme possède de bonnes performances lorsque la situation du véhicule correspond à une crevaison (dégonflage d'une roue), il n'est pas suffisamment performant dans les cas de diffusion (dégonflage lent de plusieurs roues).

L'analyse de la vibration de la roue est quant à elle mise en oeuvre par les systèmes de surveillance indirects fondés sur un algorithme qui repose sur l'étude spectrale de la vitesse de roue afin de surveiller des modes spécifiques. L'effet ici exploité tient au fait que les caractéristiques spectrales (par exemple, la distribution d'énergie dans différentes bandes de fréquences) d'un signal de vitesse angulaire de roue dépendent de la pression du pneumatique. Ainsi, si les modes surveillés sortent des gabarits qui leur sont propres, le système en déduit un problème de sous-gonflage. On connaît par exemple du document de brevet WO2012127139 un système de détection indirecte de l'état de gonflage des pneumatiques mettant en oeuvre un tel algorithme. Contrairement à l'algorithme précédent, qui repose sur l'analyse du rayon de roulement, cet algorithme exploitant l'étude spectrale du signal de vitesse angulaire de roue possède de bonnes performances dans les cas de diffusion (dégonflage lente de plusieurs roues), tandis qu'il n'est pas suffisamment performant pour les cas de crevaison (dégonflage d'une roue).

Il s'avère ainsi que les performances de chacun des algorithmes selon les deux méthodes d'analyse mises en oeuvre par les systèmes de surveillance indirects, dépendent du nombre de roues qui sont dégonflées.

Le brevet US2007061100 décrit un système de surveillance de la pression des pneumatiques mettant en oeuvre les deux méthodes d'analyses ci-dessus exposées, basées respectivement sur l'analyse du rayon de la roue et sur l'analyse de la vibration de la roue, dans lequel l'estimation de l'état de gonflage pour chaque pneumatique est basée à la fois sur les valeurs de sortie de l'algorithme selon la méthode d'analyse du rayon de la roue et sur les valeurs de sortie de l'algorithme selon la méthode d'analyse de la vibration des roues, de façon à compenser les carences individuelles des algorithmes selon les deux méthodes d'analyse. Plus précisément, on calcule, pour chaque pneumatique, une première valeur de probabilité de sous-gonflage issue de la valeur de sortie de l'algorithme selon la méthode d'analyse du rayon de la roue et une seconde valeur de probabilité de sous-gonflage issue de la valeur de sortie de l'algorithme selon la méthode d'analyse de la vibration de la roue, chaque valeur de probabilité étant indicative d'un écart entre la valeur de sortie et une valeur nominale et étant une fonction de répartition cumulative de probabilité. De là, l'estimation de l'état de gonflage pour chaque pneumatique est calculée à partir du produit des première et seconde valeurs de probabilité de sous-gonflage. Cette méthode de fusion des différentes valeurs de probabilité issues des algorithmes selon les deux méthodes d'analyse différentes n'est toutefois pas optimale.

Le document EP2226206 propose une estimation bayésienne pour estimer la probabilité de sous-gonflage d'une roue, qui utilise la distribution des fréquences de résonance des roues en fonction de leur vitesse ou de leur accélération.

Le document EP1384604 propose de comparer une mesure filtrée de pression de pneumatique à un seuil de pression minimal fonction de la température du pneumatique, une alerte étant émise lorsque ce seuil est atteint. Une logique floue permet de prévoir, en fonction d'un taux de fuite du pneumatique, la probabilité que ce seuil soit atteint en fonction du temps.

Un but de l'invention est de proposer un procédé d'estimation en temps réel de l'apparition d'un défaut de pression sur au moins un pneumatique équipant des roues d'un véhicule automobile, capable de fusionner les données issues des algorithmes selon les deux méthodes d'analyse des vitesses de roue exposées plus haut et d'améliorer la robustesse de l'estimation dans les cas de sous-gonflage en tenant compte des performances des deux algorithmes.

A cette fin, l'invention a pour objet un procédé d'estimation de l'apparition d'un défaut de pression sur au moins un des pneumatiques équipant des roues d'un véhicule automobile, ladite estimation résultant d'une analyse des vitesses angulaires des roues selon un premier algorithme basé sur une analyse de l'écart de vitesses entre chacune des roues et selon un deuxième algorithme basé sur une analyse spectrale de la vitesse de roue, dans lequel chacun des premier et deuxième algorithmes fournit, pour chaque roue, une valeur de probabilité de sous-gonflage et de taux de confiance associé en fonction d'une plage de vitesse de roue. Selon l'invention, utilise un module de décision basé sur un algorithme bayésien mettant en oeuvre les étapes suivantes :

- générer, pour chaque algorithme et pour chaque roue, une fonction de densité de probabilité a priori pour chacun de deux états prédéterminés correspondant à un premier état de sous-gonflage du pneumatique et à un second état de gonflage optimal du pneumatique, à partir d'un premier et d'un second échantillons suffisamment importants de valeurs issues de chaque algorithme acquis au cours de tests de roulage du véhicule, respectivement sachant que le pneumatique est dans un état de sous-gonflage et sachant que le pneumatique est dans un état de gonflage optimal,

- calculer, pour chaque algorithme et pour chaque roue, à partir des fonctions de densité de probabilité a priori générées, une valeur de probabilité a postériori respectivement d'état de sous-gonflage du pneumatique et d'état de gonflage optimal du pneumatique, en fonction des valeurs courantes mesurées par chaque algorithme en temps réel,

- déterminer, pour chaque algorithme et pour chaque roue, un résultat d'état en fonction d'une pondération effectuée entre les valeurs de probabilité a postériori des états précédemment calculées,

- fusionner les résultats d'état déterminés pour chaque roue et chaque algorithme, de manière à déclencher un signal d'alerte de sous-gonflage.

Selon d'autres caractéristiques avantageuses du procédé conforme à l'invention, prises isolément ou en combinaison :

- la génération des fonctions de densité de probabilité a priori comprend une étape de détermination de résultats de probabilité robuste pour une plage de vitesse donnée ayant intégrés les valeurs de taux de confiance, respectivement pour chaque couple de valeurs de probabilité et de taux de confiance associé issu du premier algorithme et pour chaque couple de valeurs de probabilité et de taux de confiance associé issu du deuxième algorithme, et une étape de présentation des résultats de probabilité robuste déterminés pour chacun des deux algorithmes en deux fonctions de densité de probabilité a priori selon la classe d'appartenance à l'état de sous-gonflage ou à l'état de gonflage optimal desdits résultats ;

- la détermination des résultats de probabilité robuste comprend préférentiellement une étape de sélection pour chaque algorithme de la valeur maximale du produit de la valeur de probabilité issue de chaque algorithme et de son taux de confiance associé sur l'ensemble des plages de vitesse pour chaque roue afin de déterminer un résultat de probabilité robuste prenant en compte toutes les plages de vitesse pour chaque roue et chaque algorithme ;
- la pondération des valeurs de probabilité à posteriori de l'état de sous-gonflage du pneumatique et de l'état de gonflage optimal du pneumatique pour chaque algorithme et chaque roue consiste avantageusement à pondérer chacune desdites valeurs de probabilité a postériori obtenue, respectivement pour l'état de sous-gonflage et l'état de gonflage optimal du pneumatique, en fonction d'un coefficient traduisant un coût prédéterminé lié à un risque d'erreur dans la détermination de chacun des états respectifs ;
- la détermination du résultat d'état pour chaque algorithme et chaque roue, consiste préférentiellement à sélectionner l'état pour lequel le résultat de la pondération minimise le risque d'erreur ;
- selon un mode de réalisation préféré, l'étape de fusion des résultats d'état déterminés pour chaque roue et chaque algorithme est effectuée par un système expert dont les règles de décision résultent d'une approche empirique ;
- de préférence, le système expert tient compte du nombre de roues ayant un problème de sous-gonflage et/ou de la position des roues ayant un problème de sous-gonflage selon les résultats d'état fournis pour chaque algorithme respectivement ;
- en variante, l'étape de fusion des résultats d'état déterminés pour chaque roue et chaque algorithme peut être effectuée au moyen d'une matrice de fusion en prenant comme critère d'entrée de la matrice le nombre de roues ayant un problème de sous-gonflage ou la position des roues ayant un problème de sous-gonflage.

L'invention concerne aussi un système de surveillance de la pression des pneumatiques équipant les roues d'un véhicule automobile du type comportant un premier algorithme d'estimation de l'apparition d'un défaut de pression sur au moins un des pneumatiques basé sur une analyse de l'écart de vitesses entre chacune des roues et un deuxième algorithme d'estimation de l'apparition d'un défaut de pression sur au moins un des pneumatiques basé sur une analyse spectrale de la vitesse de roue, chacun des premier et deuxième algorithmes fournissant, pour chaque roue, une valeur de probabilité de sous-gonflage et de taux de confiance associé en fonction d'une plage de vitesse de roue, ledit système étant caractérisé en ce qu'il comprend un module de décision basé sur un algorithme bayésien apte à :

- générer, pour chaque algorithme et pour chaque roue, une fonction de densité de probabilité a priori pour chacun de deux états prédéterminés correspondant à un premier état de sous-gonflage du pneumatique et à un second état de gonflage optimal du pneumatique, à partir d'un premier et d'un second échantillons suffisamment importants de valeurs issues de chaque algorithme acquis au cours d'une période de test de roulage du véhicule, respectivement sachant que le pneumatique est dans un état de sous-gonflage et sachant que le pneumatique est dans un état de gonflage optimal,
- calculer, pour chaque algorithme et pour chaque roue, à partir des fonctions de densité de probabilité a priori générées, une valeur de probabilité a postériori respectivement d'état de sous-gonflage du pneumatique et d'état de gonflage optimal du pneumatique, en fonction des valeurs courantes mesurées par chaque algorithme en temps réel,
- déterminer, pour chaque algorithme et pour chaque roue, un résultat d'état en fonction d'une pondération effectuée entre les valeurs de probabilité a postériori des états précédemment calculées,
- fusionner les résultats d'état déterminés pour chaque roue et chaque algorithme, de manière à déclencher un signal d'alerte de sous-gonflage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 illustre un exemple des fonctions de densité de probabilité a priori des états de sous-gonflage et de gonflage optimal d'un pneumatique générés à partir des résultats issus de l'algorithme dit fréquentiel ;
- la Figure 2 est un schéma illustrant un exemple de mise en oeuvre d'un système expert pour la fusion des résultats issus des deux algorithmes et interprétés selon l'approche Bayésienne conformément à l'invention.

On souhaite donc caractériser de façon robuste l'apparition d'un défaut de pression sur au moins un des pneumatiques équipant les roues du véhicule en répondant à la question de savoir si l'un des pneumatiques présente un état de sous-gonflage (y compris crevaison) compte tenu des valeurs de probabilité et de taux de confiance associé, fournies pour chaque pneumatique et par plage de vitesse, en tant que résultats de détection, par les deux algorithmes de détection travaillant respectivement selon la méthode d'analyse de l'écart de vitesse angulaire entre chacune des roues (dit algorithme temporel par la suite) et selon la méthode d'analyse spectrale de la vitesse de roue (dit algorithme fréquentiel) par la suite.

Le module de décision selon l'invention a pour objectif de fusionner les résultats de détection issus de ces deux algorithmes temporel et fréquentiel, afin de tirer le meilleur parti de chaque système et de minimiser les erreurs de détection par rapport à une situation de sous-gonflage donnée influant sur les performances respectives des deux algorithmes, et à la phase de roulage. Conformément à l'invention, pour affiner et confirmer ou non la caractérisation d'une situation de sous-gonflage pneumatique compte tenu des résultats de détection issus des deux algorithmes temporel et fréquentiel, le procédé mis en oeuvre est conçu pour utiliser les techniques statistiques d'estimation de Bayes connues de l'homme de l'art. Pour ce faire, le procédé de l'invention utilise un module de décision mettant en oeuvre un algorithme de décision de Bayes se basant sur une approche statistique.

Ainsi, une première étape implémentée par l'algorithme de décision de Bayes consiste à générer pour chaque algorithme fréquentiel et temporel, et pour chaque roue, deux fonctions de densité de probabilité a priori respectivement pour un état de sous-gonflage du pneumatique et pour un état de gonflage optimal du pneumatique, à partir d'une base de données d'acquisitions stockant des échantillons suffisamment importants de valeurs de détection issues de chaque algorithme et obtenus par des tests préalables de roulage du véhicule dans des états connus, c'est-à-dire sachant que le pneumatique est dans un état de sous-gonflage et sachant que le pneumatique est dans un état de gonflage optimal. Dit autrement, suivant la théorie de Bayes, cette étape vise à discriminer les deux états possibles pour la pression d'un pneumatique, à savoir l'état de sous-gonflage et l'état de gonflage optimal, en se basant sur la construction d'histogrammes de probabilité des états a priori, représentant lesdites fonctions de densité de probabilité a priori, à partir de données statistiques provenant des sorties respectives des algorithmes fréquentiel et temporel obtenues au cours de tests de roulage du véhicule.

Comme expliqué en préambule, chacun des deux algorithmes fournit en sortie, pour chaque roue du véhicule, des signaux de détection comprenant une valeur de probabilité de sous-gonflage P et une valeur de taux de confiance associé T et ce, en fonction d'une plage de vitesse. La valeur de probabilité P estimée par chacun des deux algorithmes représente les chances en pourcentage pour la roue considérée d'être dans un état de sous-gonflage. Cette valeur de probabilité P par roue et en fonction d'une plage de vitesse est calculée par chacun des deux algorithmes en instantanée sur quelques périodes d'échantillonnage. La valeur de taux de confiance T représente le facteur d'oubli nécessaire au changement de plage de vitesse. En effet, la valeur de probabilité P contient la mémoire des dernières valeurs de chance d'être en état de sous-gonflage vues pour chacune des plages de vitesse. Lorsque la vitesse du véhicule parcourt l'ensemble ou quelques unes des plages de vitesse, la valeur de probabilité conserve les dernières valeurs vues dans chacune des plages de vitesse parcourues. La plage de vitesse correspondant à la vitesse courante du véhicule possède alors un taux de confiance élevé. Inversement plus le temps s'écoule depuis la dernière actualisation de la valeur de probabilité pour une plage de vitesse donnée et une roue donnée, plus la valeur de taux de confiance associé à cette valeur de probabilité est faible. Ainsi, lorsque l'on fait le produit P x T (Probabilité x Taux de confiance), on obtient un résultat de probabilité robuste, qui tient compte de la valeur de probabilité, mais aussi de l'obsolescence possible de cette valeur.

Aussi, on utilisera ce résultat de probabilité robuste en tant que probabilité a priori pour la construction des histogrammes de probabilité des états a priori selon la loi de Bayes, pour chaque algorithme et chaque roue. Préférentiellement, on sélectionnera la plage de vitesse qui représente le produit P x T le plus élevé conduisant à la détermination d'un résultat de probabilité robuste prenant en compte toutes les plages de vitesse pour chaque roue et chaque algorithme.

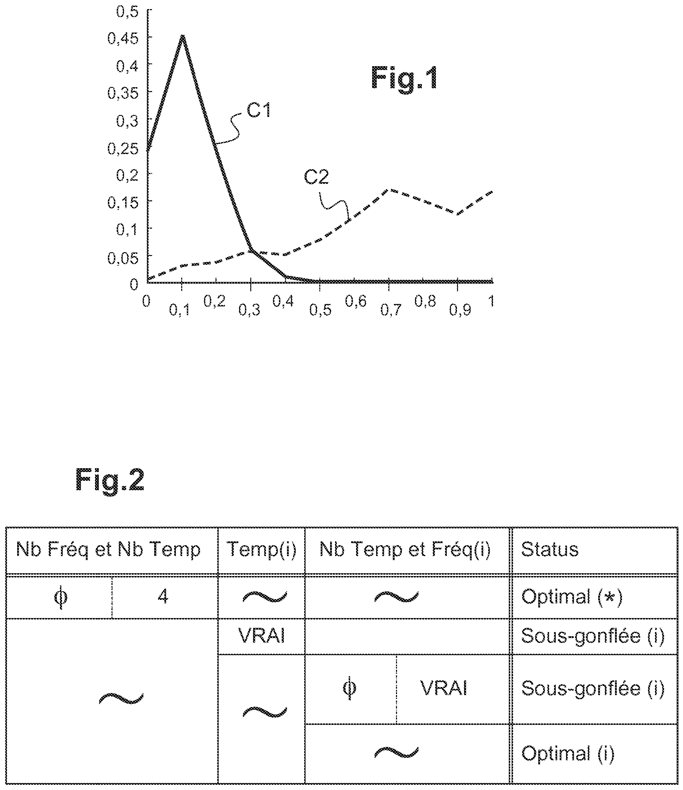

La figure 1 illustre un exemple des deux histogrammes de probabilité des états a priori de Bayes résultant de la présentation des résultats de détection issus de l'algorithme fréquentiel en deux histogrammes, respectivement pour l'état de sous-gonflage et l'état de gonflage optimal, en fonction des valeurs maximales P x T obtenues sur une période temporelle spécifique. Ces histogrammes sont normalisés pour constituer les densités de probabilité a priori. Dans l'exemple de la figure 1, les valeurs en abscisses représentent les probabilités robustes P x T en fonction de la classe d'appartenance à l'état de sous-gonflage ou à l'état de gonflage optimal des résultats de détection issus de l'algorithme fréquentiel.

Ainsi, sur la figure 1, la courbe C1 représente la fonction de densité de probabilité a priori obtenue par des tests de roulage préalables, correspondant aux valeurs de probabilité robuste P x T issues de l'algorithme fréquentiel, sachant par avance que le pneu est dans un état sous-gonflé.

La courbe C2 représente quant à elle la fonction de densité de probabilité obtenue a priori par des tests de roulage préalables, correspondant aux valeurs de probabilité robuste P x T issus de l'algorithme fréquentiel, sachant par avance que le pneu est dans un état de gonflage optimal, i.e. bien gonflé.

L'algorithme de décision de bayes met ensuite en oeuvre, pour chaque algorithme et pour chaque roue, une étape de calcul de la probabilité a postériori des états possibles, à partir des fonctions de densité de probabilité a priori ainsi générée, en fonction des valeurs de détection courantes mesurées par chaque algorithme en temps réel. Plus précisément, le théorème de Bayes permet alors de connaître, pour chaque roue et chaque algorithme, la probabilité a posteriori d'avoir un pneumatique dans un état de sous-gonflage ayant la valeur de P x T mesurée par l'algorithme fréquentiel/temporel en temps réel et la probabilité a posteriori d'avoir un pneumatique dans un état de gonflage optimal ayant la valeur de P x T mesuré par l'algorithme fréquentiel/temporel en temps réel.

Pour ce faire, on utilise des données de probabilité générale, issues par exemple d'études statistiques menées pour un parc automobile donné, par exemple par les constructeurs de pneumatique, fournissant les probabilités générales respectives pour un véhicule d'avoir un pneumatique dans un état de sous-gonflage et d'avoir ses pneumatiques dans un état de gonflage optimal. A l'appui de telles études, on sait que d'une manière générale, la probabilité générale qu'un véhicule ait un pneumatique sous-gonflé est égal à P(sous-gonflage), tandis que la probabilité générale qu'un véhicule ait ses pneumatiques bien gonflés est égale à P(optimal). Par exemple, P(sous-gonflage) est égal à 0,7 et P(optimal) est égale à 0,3. Ces valeurs de probabilité générale sont des variables d'ajustements de la fonction globale qui sera détaillée ci-après conduisant au calcul de la probabilité a posteriori des états possibles, et peuvent être modifiées afin d'obtenir le meilleur résultat final. De plus la somme des probabilités de chacun des états doit être égale à 1, soit :

$$P(sous\text{-}gonflage) + P(optimal) = 1$$

Les équations suivantes sont alors utilisées pour calculer la probabilité a posteriori des états possibles :

$$P(sous-gonflée/X) = \frac{P(sous-gonflage)*P(sous-gonflage/PT)}{P(sous-gonflage)*P(sous-gonflage/PT)+P(optimal)*P(optimal/PT)}$$

$$P(optimal/X) = \frac{P(optimal)*P(optimal/PT)}{P(optimal)*P(optimal/PT)+P(sous-gonflage)*P(sous-gonflage/PT)}$$

A titre d'exemple, suivant les fonctions de densité de probabilité a priori de la figure 1 générées pour l'algorithme fréquentiel, pour une valeur courante X de probabilité robuste égale à 0,2 (fournie par le produit P x T du couple valeur de probabilité et valeur de taux de confiance associé mesurée par l'algorithme fréquentiel), on obtient :

$$P(sous\text{-}gonflage/PT) = 0.04,$$

et

$$P(optimal//PT) = 0.23$$

Avec par exemple des valeurs de probabilité générale d'avoir un pneumatique bien gonflé dans un parc automobile donné P(optimal) égal à 0,3 et d'avoir un pneumatique sous-gonflé dans un parc automobile donné P(sous-gonflage) égal à 0,7, le résultat du calcul des probabilités a posteriori d'être dans un état de sous-gonflage et d'être dans un état de gonflage optimal pour la valeur de probabilité robuste P x T égale à 0,2 selon l'exemple, donne :

$$P(sous\text{-}gonflé/0,2) = 0,2887,$$

et

$$P(optimal/0,2) = 0,7113$$

Ainsi, suivant ce résultat des probabilités de Bayes, la probabilité d'être dans un état de gonflage optimal étant plus élevée que celle d'être dans un état de sous-gonflage, il peut être conclu qu'il n'y a aucun problème de sous-gonflage pour la roue considérée selon les résultats de détection issus de l'algorithme fréquentiel.

L'algorithme de décision de Bayes met néanmoins en oeuvre une étape supplémentaire consistant à effectuer un calcul de risques, plus précisément basé sur une évaluation du coût lié au risque pour chaque état ainsi déterminé d'être erroné. Dit autrement, ce calcul vise à pondérer les valeurs de probabilité a posteriori précédemment calculées en évaluant le coût lié au risque de se tromper pour la détermination de chaque état. En effet, à chacun des états déterminés, respectivement de sous-gonflage et de gonflage optimal, est associé un risque, à savoir le risque de déterminer une situation de sous-gonflage alors que le pneumatique considéré est en réalité dans une situation de gonflage optimal, ce qui correspond à une fausse alerte, et le risque de déterminer une situation de gonflage optimal alors que le pneumatique considéré est en réalité dans une situation de sous-gonflage, ce qui correspond alors à une non détection.

A chacun de ces risques de fausse alerte et de non détection, peut être attribué un coût, respectivement COUTfausse_alerte et COUTnon_détection, en tant que facteurs de pondération prédéterminés représentant l'importance de la conséquence liée au risque en question. L'algorithme de décision met alors en oeuvre de la manière suivante deux calculs de risques associés respectivement au coût d'une fausse alerte et au coût d'une non détection :

$$R(\text{sous-gonflée}/0{,}2) = P(\text{optimal}/0{,}2)*\text{COUTfausse\_alerte}$$

$$R(\text{optimal}/0{,}2) = P(\text{sous-gonflée}/0{,}2)*\text{COUTnon\_détection}$$

A titre d'exemple, on prend un facteur de pondération COUTfausse_alerte égal à 0,4 et un facteur de pondération COUTnon_détection égal à 0,6. Ainsi, reprenant l'exemple précédent, pour une valeur P x T égale à 0,2 issue de l'algorithme fréquentiel, on obtient :

$$R(\text{sous-gonflée}/0{,}2) = 0{,}2845$$

$$R(\text{optimal}/0{,}2) = 0{,}1732$$

On considère alors que la meilleure décision pour la roue considérée est celle qui représente le risque d'erreur le moins élevé. On applique pour ce faire la fonction MIN(R(optimal/0,2), R(sous-gonflée/0,2)) aux calculs de risque pour sélectionner l'état qui minimise le risque d'erreur, soit selon l'exemple considéré l'état de gonflage optimal.

Ce calcul des risques liés à une mauvaise décision est particulièrement avantageux en cas d'égalité entre les valeurs calculées de probabilité a posteriori d'état de sous-gonflage P(sous-gonflé/X) et de gonflage optimal P(optimal/X), dans la mesure où la minimisation des risques permet de sélectionner l'état pour lequel la combinaison probabilité et coût est la moins problématique.

Chaque sortie des algorithmes fréquentiel et temporel est traitée de la manière exposée précédemment, comprenant le calcul des probabilités a posteriori d'état de sous-gonflage et de gonflage optimal, suivi d'une pondération de ces valeurs selon des coûts liés au risque d'erreur. L'algorithme de décision de Bayes fournit ainsi un résultat d'état (sous-gonflage ou gonflage optimal) résultant des valeurs de probabilité à postériori comportant le moins de risque d'erreur, pour chacune des roues et pour chaque algorithme temporel et fréquentiel.

Le procédé de l'invention prévoit alors de mettre en oeuvre une fusion des résultats d'état ainsi obtenus pour chacun des deux algorithmes et pour chaque roue par l'algorithme de décision de bayes, de façon à réduire au minimum l'erreur intrinsèque liée à chacun des deux algorithmes temporel et fréquentiel, comme détaillée en préambule.

Selon un exemple de réalisation, cette étape de fusion peut être réalisée par un système expert dont les règles de décision résultent d'une approche empirique, c'est-à-dire sont basée sur des constats généraux, quasi systématisés. La figure 2 illustre un tableau dans lequel est schématisé un exemple de système expert pouvant être mis en oeuvre pour la fusion des résultats d'état. Les notations dans ce tableau se lisent comme suit :

i : indice d'une roue [1 à 4] ;
* : totalité des roues ;
~ : Toutes valeurs possibles ;
avec les conditions suivantes :

NbFréq : nombre de roue ayant un problème de sous-gonflage selon les résultats d'état déterminés pour l'algorithme fréquentiel ;
NbTemp : nombre de roue ayant un problème de sous-gonflage selon les résultats d'état déterminés pour l'algorithme temporel ;
Temp(i) : problème de sous-gonflage pour la roue d'indice i pour l'algorithme temporel (exemple de valeurs possibles : Vrai ou Faux) ;
Fréq(i) : problème de sous-gonflage pour la roue d'indice i pour l'algorithme fréquentiel (exemple de valeurs possibles : Vrai ou Faux).

Ainsi, dans cet exemple, le système expert applique des règles de décision qui tiennent compte des conditions sur le nombre de roues ayant un problème de sous-gonflage et/ou sur la position des roues (représentée par l'indice i) ayant un problème de sous-gonflage, tel que cela résulte des résultats d'état déterminés préalablement pour chacun des algorithmes temporel et fréquentiel. Dans cet exemple, les règles de décision doivent être appliquées en respectant l'ordre des lignes du tableau. Ainsi, suivant cet exemple, si les résultats pour l'algorithme fréquentiel indiquent 4 roues ayant un problème de sous-gonflage, avec dans le même temps 0 roue ayant un problème de sous-gonflage selon l'algorithme temporel, le statut du signal de sortie du module de décision est placé à optimal pour toutes les roues, quelles que soient les autres conditions. Si cette interprétation de la première ligne n'est pas réalisée, alors, suivant la deuxième ligne du tableau, il suffit qu'il y ait un problème de sous-gonflage détectée pour la roue i selon l'algorithme temporel pour mettre le statut du signal de sortie du module de décision à sous-gonflé pour cette roue, quelles que soient les valeurs prises par les autres conditions du tableau. Si cette interprétation de la deuxième ligne n'est pas réalisée, alors, suivant la troisième ligne du tableau, il suffit qu'il y ait un problème de sous-gonflage pour la roue i selon l'algorithme fréquentiel et qu'en même temps aucune roue ne soit détectée avec un problème de sous-gonflage selon l'algorithme temporel pour mettre le statut du signal de sortie du module de décision à sous-gonflé pour cette roue, quelles que soient les valeurs prises par les autres conditions du tableau. Enfin, si cette interprétation de la troisième ligne n'est pas réalisée, alors, suivant la dernière ligne du tableau, le statut du signal de sortie du module de décision est placé à optimal pour toutes les roues, quelles que soient les valeurs prises par les conditions du tableau, pour autant qu'elles ne répondent à aucune des interprétations des précédentes lignes.

Selon un autre mode de réalisation, la fusion des résultats d'état déterminés pour chaque roue et chaque algorithme pourrait être effectuée au moyen d'une matrice de fusion, en prenant comme critère d'entrée de la matrice le nombre de roues ayant un problème de sous-gonflage ou encore la position des roues ayant un problème de sous-gonflage.

Le passage du statut du signal de sortie du module de décision à sous-gonflé déclenche un signal d'alerte de sous-gonflage, destiné à avertir le conducteur du véhicule d'un problème de sous-gonflage pour au moins une roue du véhicule.

De préférence, afin de temporiser un résultat de détection issu de la fusion qui pourrait être sinon trop dynamique ou instantané, on ajoute, en sortie du module de décision, un compteur conçu être incrémenté ou décrémenté à chaque détection ou non détection d'un problème de sous-gonflage, en fonction du statut pris par le signal de sortie, de façon à permettre d'adapter la vitesse de détection en fonction des besoins. Le compteur permet ainsi de déclencher le signal d'alerte seulement après une certaine pérennité de signalement de sous-gonflage présenté par la fusion des données telle que présentée précédemment. Une telle temporisation permet de s'affranchir des inconvénients possibles tels que ceux liés à la présence d'une mauvaise route (perturbation évènementielle de faible durée), à la mauvaise interprétation et aux aléa temporaires des algorithmes temporel et fréquentiel en amont et à la génération d'alertes intempestives, afin de fournir une stabilité au système de détection.

On utilise par exemple un compteur saturé aux valeurs d'un octet (0-255). On peut par exemple décompter d'un pas fixe ou variable depuis une valeur initiale pouvant être de 255 à chaque signalement de sous-gonflage découlant du résultat de détection fournit par la matrice de fusion et incrémenter de manière similaire à chaque signalement de gonflage optimal. Dès qu'un seuil minimum d'alerte est atteint, par exemple égal à la valeur 0, on peut conclure que le signalement de sous-gonflage est suffisamment pérenne et on déclenche le signal d'alerte. Une fois le signal d'alerte déclenché, le compteur est bloqué à la valeur du seuil d'alerte et une requête en réinitialisation automatique ou manuelle est émise pour remettre le compteur à la valeur initiale.

## Revendications

**1.** Procédé d'estimation de l'apparition d'un défaut de pression sur au moins un des pneumatiques équipant des roues d'un véhicule automobile, ladite estimation résultant d'une analyse des vitesses angulaires des roues selon un premier algorithme basé sur une analyse de l'écart de vitesses entre chacune des roues et selon un deuxième algorithme basé sur une analyse spectrale de la vitesse de roue, dans lequel chacun des premier et deuxième algorithmes fournit, pour chaque roue, une valeur de probabilité de sous-gonflage et de taux de confiance associé en fonction d'une plage de vitesse de roue, ledit procédé étant **caractérisé en ce qu'**il utilise un module de décision basé sur un algorithme bayésien mettant en oeuvre les étapes suivantes :

- générer, pour chaque algorithme et pour chaque roue, une fonction de densité de probabilité a priori (C1, C2) pour chacun de deux états prédéterminés correspondant à un premier état de sous-gonflage du pneumatique et à un second état de gonflage optimal du pneumatique, à partir d'un premier et d'un second échantillons suffisamment importants de valeurs issues de chaque algorithme acquis au cours de tests de roulage du véhicule, respectivement sachant que le pneumatique est dans un état de sous-gonflage et sachant que le pneumatique est dans un état de gonflage optimal,

- calculer, pour chaque algorithme et pour chaque roue, à partir des fonctions de densité de probabilité a priori générées (C1, C2), une valeur de probabilité a posteriori respectivement d'état de sous-gonflage du pneumatique et d'état de gonflage optimal du pneumatique, en fonction des valeurs courantes mesurées par chaque algorithme en temps réel,

- déterminer, pour chaque algorithme et pour chaque roue, un résultat d'état en fonction d'une pondération effectuée entre les valeurs de probabilité a posteriori des états précédemment calculées,

- fusionner les résultats d'état déterminés pour chaque roue et chaque algorithme, de manière à déclencher un signal d'alerte de sous-gonflage.

2. Procédé selon la revendication 1, **caractérisé en ce que** la génération des fonctions de densité de probabilité a priori comprend une étape de détermination de résultats de probabilité robuste pour une plage de vitesse donnée ayant intégrés les valeurs de taux de confiance, respectivement pour chaque couple de valeurs de probabilité et de taux de confiance associé issu du premier algorithme et pour chaque couple de valeurs de probabilité et de taux de confiance associé issu du deuxième algorithme, et une étape de présentation des résultats de probabilité robuste déterminés pour chacun des deux algorithmes en deux fonctions de densité de probabilité a priori selon la classe d'appartenance à l'état de sous-gonflage ou à l'état de gonflage optimal desdits résultats.

3. Procédé selon la revendication 2, **caractérisé en ce que** la détermination des résultats de probabilité robuste comprend une étape de sélection pour chaque algorithme de la valeur maximale du produit de la valeur de probabilité issue de chaque algorithme et de son taux de confiance associé sur l'ensemble des plages de vitesse pour chaque roue, afin de déterminer un résultat de probabilité robuste prenant en compte toutes les plages de vitesse pour chaque roue et chaque algorithme.

4. Procédé selon l'une quelconque des revendications précédentes, **caractérisé en ce que** la pondération des valeurs de probabilité à posteriori de l'état de sous-gonflage du pneumatique et de l'état de gonflage optimal du pneumatique pour chaque algorithme et chaque roue consiste à pondérer chacune desdites valeurs de probabilité a postériori obtenue, respectivement pour l'état de sous-gonflage et l'état de gonflage optimal du pneumatique, en fonction d'un coefficient traduisant un coût prédéterminé lié à un risque d'erreur dans la détermination de chacun des états respectifs.

5. Procédé selon la revendication 4, **caractérisé en ce que** la détermination du résultat d'état pour chaque algorithme et chaque roue, consiste à sélectionner l'état pour lequel le résultat de la pondération minimise le risque d'erreur.

6. Procédé selon l'une quelconque des revendications précédentes, **caractérisé en ce que** l'étape de fusion des résultats d'état déterminés pour chaque roue et chaque algorithme est effectuée par un système expert dont les règles de décision résultent d'une approche empirique.

7. Procédé selon la revendication 6, **caractérisé en ce que** le système expert tient compte du nombre de roues ayant un problème de sous-gonflage et/ou de la position des roues ayant un problème de sous-gonflage selon les résultats d'état fournis pour chaque algorithme respectivement.

8. Procédé selon l'une quelconque des revendications 1 à 5, **caractérisé en ce que** l'étape de fusion des résultats d'état déterminés pour chaque roue et chaque algorithme est effectuée au moyen d'une matrice de fusion en prenant comme critère d'entrée de la matrice le nombre de roues ayant un problème de sous-gonflage ou la position des roues ayant un problème de sous-gonflage.

9. Système de surveillance de la pression des pneumatiques équipant les roues d'un véhicule automobile du type comportant un premier algorithme d'estimation de l'apparition d'un défaut de pression sur au moins un des pneumatiques basé sur une analyse de l'écart de vitesses entre chacune des roues et un deuxième algorithme d'estimation de l'apparition d'un défaut de pression sur au moins un des pneumatiques basé sur une analyse spectrale de la vitesse de roue, chacun des premier et deuxième algorithmes fournissant, pour chaque roue, une valeur de probabilité de sous-gonflage et de taux de confiance associé en fonction d'une plage de vitesse de roue, ledit système étant **caractérisé en ce qu'**il comprend un module de décision basé sur un algorithme bayésien apte à :

- générer, pour chaque algorithme et pour chaque roue, une fonction de densité de probabilité a priori (C1, C2) pour chacun de deux états prédéterminés correspondant à un premier état de sous-gonflage du pneumatique et à un second état de gonflage optimal du pneumatique, à partir d'un premier et d'un second échantillons suffisamment importants de valeurs issues de chaque algorithme acquis au cours d'une période de test de roulage du véhicule, respectivement sachant que le pneumatique est dans un état de sous-gonflage et sachant que le pneumatique est dans un état de gonflage optimal,

- calculer, pour chaque algorithme et pour chaque roue, à partir des fonctions de densité de probabilité a priori générées (C1, C2), une valeur de probabilité a postériori respectivement d'état de sous-gonflage du pneumatique et d'état de gonflage optimal du pneumatique, en fonction des valeurs courantes mesurées par chaque algorithme en temps réel,

- déterminer, pour chaque algorithme et pour chaque roue, un résultat d'état en fonction d'une pondération effectuée entre les valeurs de probabilité a postériori des états précédemment calculées,

- fusionner les résultats d'état déterminés pour chaque roue et chaque algorithme, de manière à déclencher un signal d'alerte de sous-gonflage.

## Patentansprüche

1. Verfahren zur Schätzung des Auftretens eines Druckmangels bei mindestens einem der Räder eines Kraftfahrzeugs ausstattenden Luftreifen, wobei die Schätzung aus einer Analyse der Winkelgeschwindigkeiten der Räder gemäß einem ersten Algorithmus basierend auf einer Analyse der Geschwindigkeitsabweichung zwischen jedem der Räder und gemäß einem zweiten Algorithmus basierend auf einer Spektralanalyse der Radgeschwindigkeit resultiert, wobei jeder der ersten und zweiten Algorithmen für jedes Rad einen Wert einer Unterdruck-Wahrscheinlichkeit und eines zugeordneten Vertrauensniveaus abhängig von einem Radgeschwindigkeitsbereich liefert, wobei das Verfahren **dadurch gekennzeichnet ist, dass** es ein Entscheidungsmodul basierend auf einem Bayesschen Algorithmus verwendet, das die folgenden Schritte durchführt:

- Erzeugen, für jeden Algorithmus und für jedes Rad, einer Dichtefunktion der A-Priori-Wahrscheinlichkeit (C1, C2) für jeden von zwei vorbestimmten Zuständen entsprechend einem ersten Unterdruckzustand des Luftreifens und einem zweiten optimalen Druckzustand des Luftreifens, ausgehend von einer ersten und einer zweiten ausreichend großen Tastprobe von Werten, die von jedem Algorithmus stammen, der während Fahrtests des Fahrzeugs erhalten wurde, wobei zu berücksichtigen ist, dass der Luftreifen in einem Unterdruckzustand ist, bzw. zu berücksichtigen ist, dass der Luftreifen in einem optimalen Druckzustand ist,

- Berechnen, für jeden Algorithmus und für jedes Rad, ausgehend von den erzeugten Dichtefunktionen einer A-Priori-Wahrscheinlichkeit (C1, C2), eines A-Posteriori-Wahrscheinlichkeitswerts eines Unterdruckzustands des Luftreifens bzw. eines optimalen Druckzustands des Luftreifens, abhängig von den von jedem Algorithmus in Echtzeit gemessenen laufenden Werten,

- Bestimmen, für jeden Algorithmus und für jedes Rad, eines Zustandsergebnisses abhängig von einer Gewichtung, die zwischen den A-Posteriori-Wahrscheinlichkeitswerten der vorher berechneten Zustände ausgeführt wird,

- Fusionieren der für jedes Rad und jeden Algorithmus bestimmten Zustandsergebnisse, um ein Unterdruck-Warnsignal auszulösen.

2. Verfahren nach Anspruch 1, **dadurch gekennzeichnet, dass** die Erzeugung der Dichtefunktionen einer A-Priori-Wahrscheinlichkeit einen Schritt der Bestimmung von Ergebnissen robuster Wahrscheinlichkeit für einen gegebenen Geschwindigkeitsbereich, in die die Vertrauensniveauwerte für jedes Paar von Wahrscheinlichkeitswerten und des zugeordneten Vertrauensniveaus, das vom ersten Algorithmus stammt, bzw. für jedes Paar von Wahrscheinlichkeitswerten und des zugeordneten Vertrauensniveaus, das vom zweiten Algorithmus stammt, integriert sind, und einen Schritt der Anzeige der für jeden der zwei Algorithmen bestimmten Ergebnisse robuster Wahrscheinlichkeit in zwei Dichtefunktionen einer A-Priori-Wahrscheinlichkeit gemäß der Zugehörigkeitsklasse zum Unterdruckzustand oder zum optimalen Druckzustand der Ergebnisse enthält.

3. Verfahren nach Anspruch 2, **dadurch gekennzeichnet, dass** die Bestimmung der Ergebnisse robuster Wahrscheinlichkeit einen Schritt der Auswahl für jeden Algorithmus des maximalen Werts des Produkts aua dem von jedem Algorithmus stammenden Wahrscheinlichkeitswert und seinem zugeordneten Vertrauensniveau über die Gesamtheit der Geschwindigkeitsbereiche für jedes Rad enthält, um ein Ergebnis robuster Wahrscheinlichkeit zu bestimmen, das alle Geschwindigkeitsbereiche für jedes Rad und jeden Algorithmus berücksichtigt.

**4.** Verfahren nach einem der vorhergehenden Ansprüche, **dadurch gekennzeichnet, dass** die Gewichtung der A-Posteriori-Wahrscheinlichkeitswerte des Unterdruckzustands des Luftreifens und des optimalen Druckzustands des Luftreifens für jeden Algorithmus und jedes Rad darin besteht, jeden der erhaltenen A-Posteriori-Wahrscheinlichkeitswerte für den Unterdruckzustand bzw. den optimalen Druckzustand des Luftreifens zu gewichten, abhängig von einem Koeffizienten, der vorbestimmte Kosten verbunden mit einem Fehlerrisiko bei der Bestimmung jedes der Zustände ausdrückt.

**5.** Verfahren nach Anspruch 4, die Bestimmung des Zustandsergebnisses für jeden Algorithmus und jedes Rad, darin besteht, den Zustand auszuwählen, für den das Ergebnis der Gewichtung das Fehlerrisiko minimiert.

**6.** Verfahren nach einem der vorhergehenden Ansprüche, **dadurch gekennzeichnet, dass** der Schritt der Fusion der für jedes Rad und jeden Algorithmus bestimmten Zustandsergebnisse von einem Expertensystem ausgeführt wird, dessen Entscheidungsregeln aus einer empirischen Vorgehensweise resultieren.

**7.** Verfahren nach Anspruch 6, **dadurch gekennzeichnet, dass** das Expertensystem die Anzahl von Rädern, die ein Unterdruckproblem haben, und/oder die Stellung der Räder, die ein Unterdruckproblem haben, gemäß den für jeden Algorithmus gelieferten Zustandsergebnissen berücksichtigt.

**8.** Verfahren nach einem der Ansprüche 1 bis 5, **dadurch gekennzeichnet, dass** der Schritt der Fusion der für jedes Rad und jeden Algorithmus bestimmten Zustandsergebnisse mittels einer Fusionsmatrix ausgeführt wird, indem als Eingangskriterium der Matrix die Anzahl von Rädern mit einem Unterdruckproblem oder die Stellung der Räder mit einem Unterdruckproblem genommen wird.

**9.** System zur Überwachung des Drucks der die Räder eines Kraftfahrzeugs ausstattenden Luftreifen von der Art, die einen ersten Schätzalgorithmus des Auftretens eines Druckmangels bei mindestens einem der Luftreifen basierend auf einer Analyse der Geschwindigkeitsabweichung zwischen jedem der Räder und einen zweiten Schätzalgorithmus des Auftretens eines Druckmangels bei mindestens einem der Luftreifen basierend auf einer Spektralanalyse der Radgeschwindigkeit aufweist, wobei jeder der ersten und zweiten Algorithmen für jedes Rad einen Wert der Unterdruck-Wahrscheinlichkeit und eines zugeordneten Vertrauensniveaus abhängig von einem Radgeschwindigkeitsbereich liefert, wobei das System **dadurch gekennzeichnet ist, dass** es ein Entscheidungsmodul basierend auf einem Bayesschen Algorithmus enthält, das fähig ist:

- für jeden Algorithmus und für jedes Rad eine Dichtefunktion der A-Priori-Wahrscheinlichkeit (C1, C2) für jeden von zwei vorbestimmten Zuständen entsprechend einem ersten Unterdruckzustand des Luftreifens und einem zweiten optimalen Druckzustand des Luftreifens zu erzeugen, ausgehend von einer ersten und einer zweiten ausreichend großen Tastprobe von Werten, die von jedem Algorithmus stammen, der während einer Fahrtestperiode des Fahrzeugs erhalten wurde, wobei zu berücksichtigen ist, dass der Luftreifen in einem Unterdruckzustand ist, bzw. zu berücksichtigen ist, dass der Luftreifen in einem optimalen Druckzustand ist,
- für jeden Algorithmus und für jedes Rad ausgehend von den erzeugten Dichtefunktionen der A-Priori-Wahrscheinlichkeit (C1, C2) einen A-Posteriori-Wahrscheinlichkeitswert eines Unterdruckzustands des Luftreifen bzw. eines optimalen Druckzustands des Luftreifens zu berechnen, abhängig von den von jedem Algorithmus in Echtzeit gemessenen laufenden Werten,
- für jeden Algorithmus und für jedes Rad ein Zustandsergebnis abhängig von einer Gewichtung zu bestimmen, die zwischen den A-Posteriori-Wahrscheinlichkeitswerten der vorher berechneten Zustände ausgeführt wird,
- die für jedes Rad und jeden Algorithmus bestimmten Zustandsergebnisse zu fusionieren, um ein Unterdruck-Warnsignal auszulösen.

## Claims

**1.** Method for estimating the occurrence of a pressure defect in at least one of the tires fitted to the wheels of a motor vehicle, said estimate resulting from an analysis of the angular velocities of the wheels according to a first algorithm based on an analysis of the speed difference between each of the wheels and according to a second algorithm based on a spectral analysis of the wheel speed, in which each of the first and second algorithms provides, for each wheel, an underinflation probability value and an associated confidence level value as a function of a wheel speed range, said method being **characterized in that** it uses a decision module based on a Bayesian algorithm employing the following steps:

- for each algorithm and for each wheel, generating an a priori probability density function (C1, C2) for each of two predetermined states corresponding to a first state of underinflation of the tire and a second state of optimal inflation of the tire, on the basis of first and second sufficiently large samplings of values, obtained from each algorithm, acquired during running tests of the vehicle, respectively knowing that the tire is in a state of underinflation and knowing that the tire is in a state of optimal inflation,

- for each algorithm and for each wheel, on the basis of the generated a priori probability density functions (C1, C2), calculating an a posteriori probability value respectively of a state of underinflation of the tire and a state of optimal inflation of the tire, as a function of the current values measured by each algorithm in real time,

- for each algorithm and for each wheel, determining a state result as a function of weighting carried out between the previously calculated a posteriori probability values of the states,

- combining the state results determined for each wheel and each algorithm so as to trigger an underinflation warning signal.

2. Method according to Claim 1, **characterized in that** the generation of the a priori probability density functions comprises a step of determining robust probability results for a given speed range having integrated the confidence level values respectively for each pair of values of probability and associated confidence level obtained from the first algorithm and for each pair of values of probability and associated confidence level obtained from the second algorithm, and a step of presenting the robust probability results determined for each of the two algorithms as two a priori probability density functions according to the class of membership to the state of underinflation or the state of optimal inflation of said results.

3. Method according to Claim 2, **characterized in that** the determination of the robust probability results comprises a step of selecting, for each algorithm, the maximum value of the product of the probability value obtained from each algorithm and its associated confidence level over all the speed ranges for each wheel, in order to determine a robust probability result taking into account all the speed ranges for each wheel and each algorithm.

4. Method according to any one of the preceding claims, **characterized in that** the weighting of the a posteriori probability values of the state of underinflation of the tire and of the state of optimal inflation of the tire for each algorithm and each wheel consists in weighting each of said a posteriori probability values obtained respectively for the state of underinflation and the state of optimal inflation of the tire, as a function of a coefficient expressing a predetermined cost associated with a risk of error in the determination of each of the respective states.

5. Method according to claim 4, **characterized in that** the determination of the state result for each algorithm and each wheel consists in selecting the state for which the result of the weighting minimizes the risk of error.

6. Method according to any one of the preceding claims, **characterized in that** the step of combining the state results determined for each wheel and each algorithm is carried out by an expert system, the decision rules of which are the result of an empirical approach.

7. Method according to Claim 6, **characterized in that** the expert system takes into account the number of wheels having an underinflation problem and/or the position of the wheels having an underinflation problem according to the state results provided for each algorithm, respectively.

8. Method according to any one of Claims 1 to 5, **characterized in that** the step of combining the state results determined for each wheel and each algorithm is carried out by means of a combination matrix, by taking the number of wheels having an underinflation problem or the position of the wheels having an underinflation problem as an input criterion of the matrix.

9. System for monitoring the pressure of tires fitted to the wheels of a motor vehicle, of the type having a first algorithm for estimating the occurrence of a pressure defect in at least one of the tires based on an analysis of the speed difference between each of the wheels and a second algorithm for estimating the occurrence of a pressure defect in at least one of the tires based on a spectral analysis of the wheel speed, each of the first and second algorithms providing, for each wheel, an underinflation probability value and an associated confidence level value as a function of a wheel speed range, said system being **characterized in that** it comprises a decision module based on a Bayesian algorithm and capable of:

- for each algorithm and for each wheel, generating an a priori probability density function (C1, C2) for each of two predetermined states corresponding to a first state of underinflation of the tire and a second state of optimal

**EP 3 068 638 B1**

inflation of the tire, on the basis of first and second sufficiently large samplings of values, obtained from each algorithm, acquired during a running test period of the vehicle, respectively knowing that the tire is in a state of underinflation and knowing that the tire is in a state of optimal inflation,

- for each algorithm and for each wheel, on the basis of the generated a priori probability density functions (C1, C2), calculating an a posteriori probability value respectively of a state of underinflation of the tire and a state of optimal inflation of the tire, as a function of the current values measured by each algorithm in real time,
- for each algorithm and for each wheel, determining a state result as a function of weighting carried out between the previously calculated a posteriori probability values of the states,
- combining the state results determined for each wheel and each algorithm so as to trigger an underinflation warning signal.

Fig.1

Fig.2

| Nb Fréq et Nb Temp | | Temp(i) | Nb Temp et Fréq(i) | | Status |
|---|---|---|---|---|---|
| ∅ | 4 | ～ | ～ | | Optimal (*) |
| | | VRAI | | | Sous-gonflée (i) |
| ～ | | ～ | ∅ | VRAI | Sous-gonflée (i) |
| | | | ～ | | Optimal (i) |

**EP 3 068 638 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2927018
- WO 2012127139 A
- US 2007061100 A
- EP 2226206 A
- EP 1384604 A